(19)

Europäisches
Patentamt
European
Patent Office
Office européen
des brevets

(11) EP 2 542 917 B1

(12) **EUROPEAN PATENT SPECIFICATION**

(45) Date of publication and mention
of the grant of the patent:
**14.05.2014 Bulletin 2014/20**

(21) Application number: **11717330.2**

(22) Date of filing: **03.03.2011**

(51) Int Cl.:
*G01V 1/00* *(2006.01)*     *E21D 9/00* *(2006.01)*

(86) International application number:
**PCT/IB2011/050900**

(87) International publication number:
**WO 2011/107955 (09.09.2011 Gazette 2011/36)**

(54) **TUNNEL SEISMIC WHILE DRILLING SIGNAL PROCESSING AND ACQUISITION METHOD**

METHODE ZUR VERARBEITUNG UND ERWERB SEISMISCHER SIGNAL FÜR DEN TUNNELBAU

PROCEDE DE TRAITEMENT ET ACQUISITION DU SIGNAL SISMIQUE POUR LA CONSTRUCTION
DE TUNNEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.03.2010 IT PD20100064**

(43) Date of publication of application:
**09.01.2013 Bulletin 2013/02**

(73) Proprietor: **Istituto Nazionale di Oceanografia e di
Geofisica
Sperimentale - OGS
34010 Sgonico (Trieste) (IT)**

(72) Inventors:
• **POLETTO, Flavio
I-34170 Gorizia (IT)**
• **PETRONIO, Lorenzo
I-34134 Trieste (IT)**

(74) Representative: **Pavan, Andrea et al
Notarbartolo & Gervasi S.p.A.
Corso di Porta Vittoria 9
20122 Milano (IT)**

(56) References cited:
**EP-A2- 1 826 588     JP-A- 7 280 946
JP-A- 11 125 090     JP-A- 2000 170 478**

**Description**

Field of the invention

The present invention relates to a method of acquisition and processing of seismic signals during tunnel boring.

Prior art

The cutter head of a boring machine, indicated hereinafter with its acronym TBM (tunnel boring machine), is generally provided with cutters, which are distributed on its surface. These cutters are points at which the concentrated action is exerted that crushes the rock and are the main points of contact of the front of the TBM with the formation that is to be bored.

The continuous rotation of the cutter head, which is pressed against the formation by hydraulic presses (hydraulic jacks), causes crushing of the rock and creates seismic sound by the vibrations that are generated at each of these points of contact. These vibrations are transmitted to the formation and are irradiated as seismic and acoustic waves. Moreover, these vibrations are also transmitted to the TBM itself, in which they are propagated, exciting characteristic vibration modes. Seismic signals are also generated by the friction of the lateral surface of the TBM against the surrounding rock, during advance of the head of the TBM under the action of the hydraulic presses.

The operation of the TBM also produces other sounds/vibrations, for example that of the hydraulic motors, pumps and mechanical systems for removing the crushed rock material produced by boring.

The known methods for acquisition and processing of seismic signals while drilling in the tunnel are generally indicated with the English acronym TSWD.

These utilize the seismic sound produced by the boring/excavating machine for investigation and characterization of the rock front on which the machine has to work, to detect in good time unexpected obstacles in the drilling path and anticipate critical situations since there may be technical risks as well as possible risks for the integrity of the tunnel itself, for personnel, as well as economic risks from the costs of the repair operations following an incident.

These methods typically use reference measurements, also called pilot measurements, acquired by means of sensors mounted on the TBM for recording the sound at the "source", and thus able to identify and use it as "signal", produced by the head of the TBM during boring, together with seismic measurements acquired with in-tunnel geophones and/or accelerometers, either inserted/fixed directly in/on the rock or installed/located on the TBM so as to be coupled to the rock, or outside. These pilot and seismic measurements are correlated with one another and are processed by known methods in order to obtain seismograms that can be interpreted while drilling. These seismograms are produced at fixed points or at regular intervals of advance of the excavation front and are used for obtaining in-tunnel seismic profiles and for processing seismic, acoustic, sonic and ultrasonic images, constructing structural and stratigraphic maps for prediction of the formation to be bored and for characterization of the rock already bored.

The known methods of seismic analysis while drilling in tunnels use pilot sensors which together record the signals produced randomly by unidentified points of the boring front on the head of the TBM. Thus, the data acquired in these methods are the sum of signals received from various positions on the cutter head and produce seismic results averaged in space.

Thus, a low-pass filtering effect is obtained for the frequencies, i.e. a high-pass filtering effect for the wavelengths of the resultant signal.

For this reason, the components of the signal in the formation with smaller wavelength or of the order of magnitude of the diameter of the TBM can be highly attenuated by interference. Especially with the TBM machines with large radial dimensions. This low-pass filtering effect limits, in a non-negligible manner, the temporal and spatial resolution of characterization of the excavation front and so limits the ability to obtain detailed images of objects in front of and around the excavation front.

For example, for observing, with the criterion of resolution that adopts the Rayleigh limit $\lambda d/4$, where $\lambda d$ is the dominant wavelength, an unexpected object in front of the excavation front, for instance a fault, a rocky body, an obstacle, a foundation, with a size of 1 m, it is necessary to use signals with dominant wavelength $\lambda d \leq 4$ m. Therefore the signals with a suitable bandwidth must contain even lower wavelengths. With a TBM with a diameter of 15 metres - even assuming that it produces signals with frequencies of the order of magnitude of a thousand Hz - it can be difficult to obtain seismic signals containing said wavelengths and detailed images of geological structures with dimensions of a few metres when the signal of the source is averaged.

Methods are known that use signal generators and receivers on the head of the TBM. These acoustic systems can only be applied effectively with pressurized TBMs, without tackling the problem of utilizing the vibrations of excavation itself, which are always available while drilling.

Another system envisages the use of acoustic emission sensors and accelerometers on the head of the TBM to obtain information on the conditions of the cutter disks, and the conditions of the boring machine. However, this system is not able to provide adequate/detailed seismic information on the rock formations in front of the TBM.

Another system utilizes active vibrating sources with a technique similar to the Vibroseis, which finds application with TBMs of a particular type called EPB from the English acronym for earth pressure balanced, suitable for excavation in soft ground of the clayey, silty, and sandy type. With such a system it is difficult to instal geophones along the path of the bored tunnel.

Summary of the invention

The purpose of the present invention is to provide a method for the acquisition and processing of seismic signals during tunnel boring that is able to permit more detailed investigation and characterization of the rock front on which a TBM has to work.

The present invention relates to a method for the acquisition and processing of seismic signals during tunnel boring, according to Claim 1.

The present method envisages the use of a plurality of pilot sensors suitably distributed on the head of the boring machine preferably with a sensor near each cutter of the head of the TBM, for the purpose of identifying as accurately as possible the point or points of generation of the seismic signal/sound produced by the interaction of the TBM with the rock.

The signals detected are then compared with at least one recording obtained at a suitable distance by means of at least one geophone or by means of a vibration sensor on the machine itself in order to detect the signals of seismic vibration that are propagated through the rock by being reflected and/or diffracted within it.

The use of several sensors greatly improves detection of the sources of acoustic signal, but as the head of the TBM is very rigid, the vibration signals are propagated on it with short delays, so that the signals generated by cutters that are at least close tend to overlap and be detected together by the respective sensors.

Advantageously, the present invention describes a method for isolating the acoustic signal recorded by each sensor from the contributions of the nearby cutters, so as to be able to attribute, with greater certainty and accuracy, the position of the source of sound on the rock front for characterization of said rock front.

In more detail, the present invention achieves the aforementioned aim by grouping together the sensors positioned on the head of the TBM in variable groups of sensors and by correlating and/or deconvoluting the signals recorded by at least one geophone with the signal recorded by each group.

Advantageously, only the signals detected by the sensors whose respective cutters are in contact with a predefined portion of the rock front are taken into consideration.

This variable grouping makes it possible to relate the signals detected by each group of sensors in turn with the recordings made by means of said at least one geophone.

When a cutter is no longer in contact with said predefined portion of the rock front, the signal detected by it is not taken into consideration for characterization of said portion of the rock front.

More precisely, during a portion of advance of the TBM, a volume of rock front virtually partitioned into partial volumes is considered.

It is preferred for said partial volumes obtained with said virtual partitioning to be prisms with one surface facing the head of the TBM and side walls perpendicular to it. Moreover, it is preferred for each volume to have dimensions such that it can be likened to a point source contained in a few metres or even less for the purposes of the present invention.

To implement this procedure, the measurements of the signal recorded by the geophone and of the signals of the sensors of the TBM are related to one another temporally, and are also related temporally with the measurements of the instantaneous parameters of excavation/boring, including advance, angle of rotation, rate of penetration ROP, speed of rotation RPM and thrust.

For this purpose, the method envisages the following steps

- virtual partitioning of a predefined volume of the rock front facing the head of the TBM into volume portions each having a surface facing a portion of the head of the TBM,
- identification of the group of sensors passing, during rotation-translation of the TBM, through one of said partial volumes,
- transformation of systems of reference and of optional vector quantities from a moving system of reference associated with the head of the TBM to a fixed system of reference integral with said volume of the rock front and
- comparison (correlation and/or deconvolution) between the seismic signal(s) recorded by the geophone(s) and the pilot signals detected by the group of sensors passing through said partial volume.

The first two steps described above correspond to suitable windowing of multichannel signals recorded on the head of the TBM for obtaining at least one independent trace for each partial volume bored by the TBM.

These operations are repeated for all the portions of the rock front until the latter is completely characterized and until the TBM has passed through the entire volume of the rock front, after which it starts again from the beginning.

Said moving system of reference has a reference coordinate axis associated with the axis of rotation of the TBM.

The resultant signal obtained following said operation of correlation and/or deconvolution is of the pulse type compatible with seismograms and is characterized by a higher signal/noise ratio, thus permitting post-processing of said resultant signal by further techniques of analysis and consequently more reliable and accurate characterization of the rock front.

According to a preferred embodiment of the invention, when the distribution of the cutting tools on the head of the TBM is not uniform, or when the excavating action is not applied with equally distributed forces, or if virtual partitioning of said predefined volume of the rock front is not equal, then the signals detected by the sensor or sensors passing through each partial volume can be suitably weighted, also based on positional and/or dynamic parameters of the boring operation.

The dependent claims describe preferred embodiments of the invention, forming an integral part of the present description.

Brief description of the drawings

Further characteristics and advantages of the invention will become clearer from the detailed description of preferred, but not exclusive, embodiments of a method for the acquisition and processing of seismic signals during tunnel boring, described for purposes of illustration and non-exhaustively, with the aid of the appended drawings in which:

Fig. 1 shows a side view of a TBM of diameter DT with the rotating head and the paths of propagation of the seismic signals,

Fig. 2 shows a virtual partial volume fixed relative to the rock formation positioned in front of the TBM and traversed by the latter,

Fig. 3 shows the components in the coordinate system (R, X, T) on the rotating TBM and in the coordinate system (X, Y, Z) integral with the rock formation,

Fig. 4 shows two separate points on the front of the TBM in which the signals Si and Sj are produced.

Fig. 5 shows an example of artificial data, temporal series of random digital samples, simulating continuous acquisition of signals by 12 sensors positioned on the TBM.

The same reference numbers and the same reference letters in the drawings identify the same elements or components.

Detailed description of a preferred embodiment of the invention

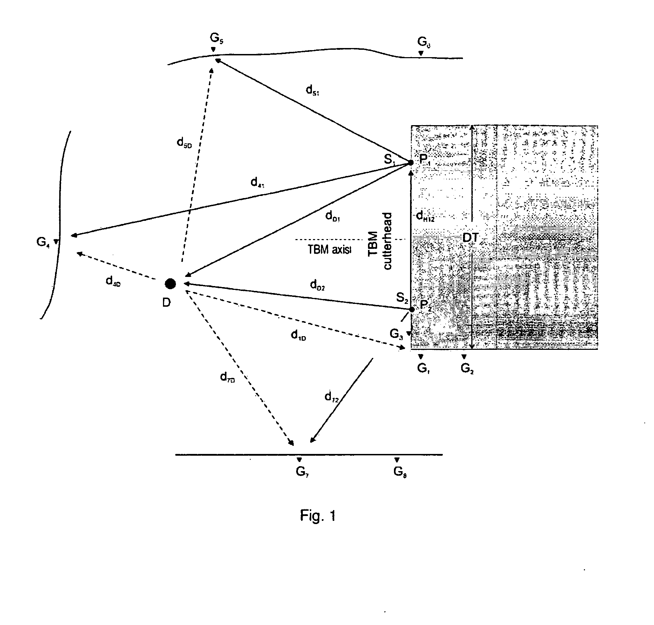

Referring to Fig. 1, the signals S1 and S2 are emitted while boring from two different points on the head of the TBM where the sensors P1 and P2 are positioned.

P1 and P2 also receive the signals produced by S2 and S1 respectively. Each of these travels at least a minimum distance $d_{H12}$ through said head of the TBM.

Said signals are also propagated in the rock with path lengths dD1 and dD2 at least as far as a point D in front of the TBM. D can represent a body with different acoustic properties relative to the surrounding rock, i.e. can represent a diffracting or reflecting element. G1 - G8 represent geophones that receive the seismic signal from S1 and S2 directly through paths d11 - d81, etc., and the signal diffracted or reflected by D according to the respective path lengths d1D - d8D.

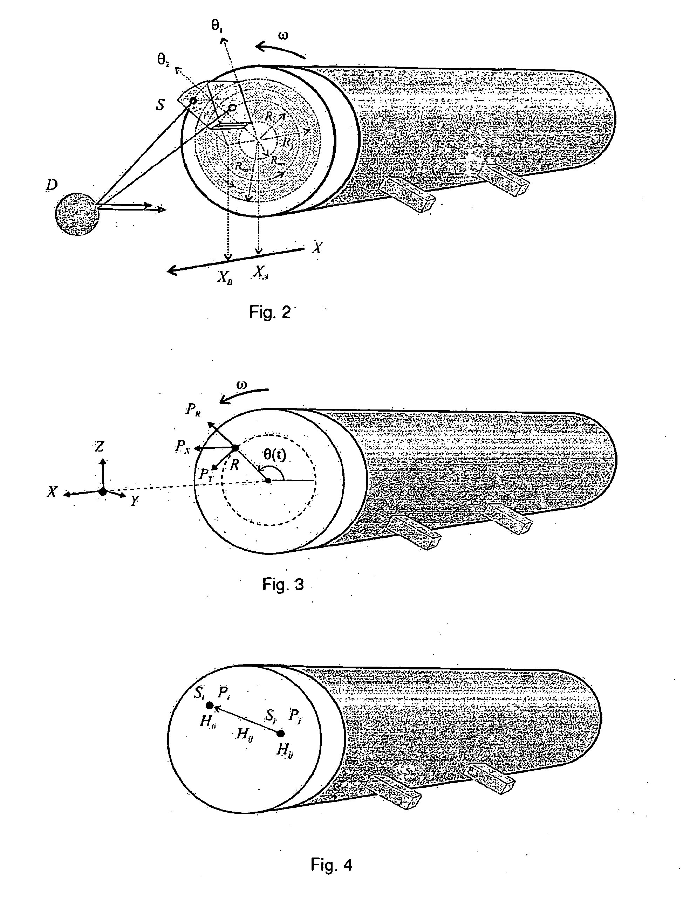

Referring to Fig. 2, the TBM rotates with an angular velocity $\omega$, for example with an anticlockwise sense of rotation for an observer looking at the head of the TBM from the rock front. A partial volume can for example be delimited by the angles $\theta 1$ and $\theta 2$, by the radii Rmin and Rmax and by the positions of axial advance XA and XB.

Said partial volume can be likened to a localized source distributed in said volume and is traversed periodically by the sensors placed at a radial distance from the axis of rotation R between Rmin and Rmax, see Fig. 3.

Referring to Fig. 4, Hii is the response to the pulse of the TBM for a pulse signal Si measured by Pi in the position adjacent to Si, while Hjj is the response to the pulse of a signal Sj measured at Pj, hence Hij is the transfer function for a signal Sj measured by Pi.

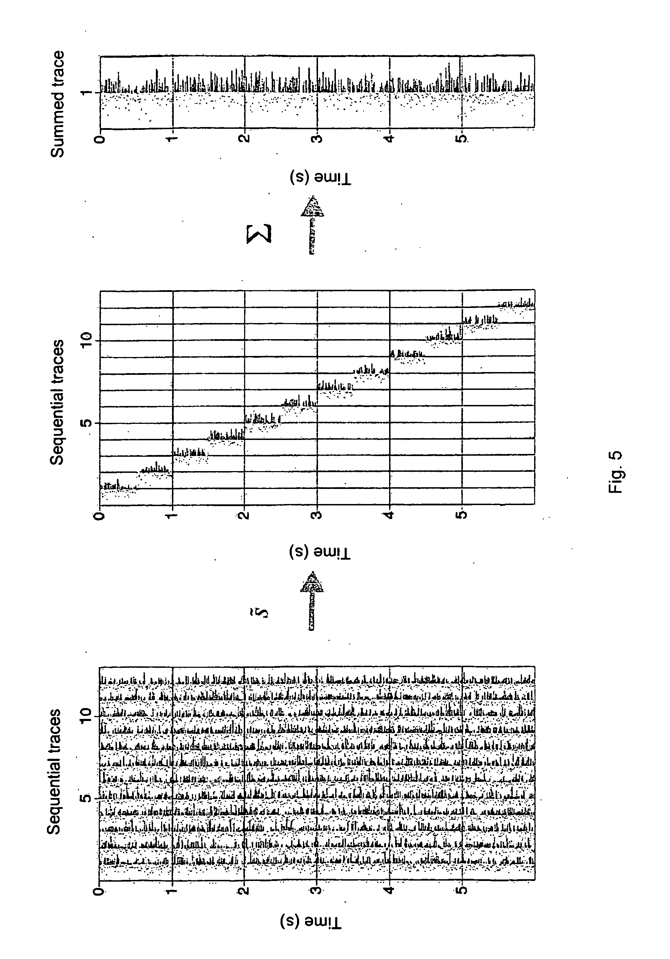

Referring to Fig. 5, the ordinate shows the listening time in seconds. Each trace corresponds to the signal of a sensor during a single revolution of the TBM. The plot at the centre represents the result of exclusion of the signals recorded by the sensors outside of a partial volume, for example that shown in Fig. 2. Accordingly, the traces shown are the result of selection of the time intervals corresponding to the transit of each respective sensor in said partial volume.

The plot on the right represents the concatenation of the traces represented in the plot at the centre.

Advantageously, said plot is specifically referred to a partial volume of the rock front. Once said plot is obtained, it can be related to the plots recorded by one or more geophones by operations of cross-correlation and/or deconvolution.

This relation is, to a first approximation, independent of the displacement of the head of the TBM.

Advantageously, the invention can provide, as the end result, seismograms while drilling, for predicting obstacles and for obtaining, by processing the seismograms using known methods, acoustic images in front of and around the TBM.

The maximum time of representation of the seismograms depends on the position of the sources, the position of the geophone(s), the properties of the subsoil and the maximum distance covered by the waves that we wish to observe, as shown in Fig. 1.

If for example a source S and a seismic sensor G are on or near the TBM, and if for example we wish to see the diffraction/reflection of a body D that is located at a distance of 100 m in front of the excavation front, the forward and return path of the diffracted/reflected seismic signal is found to be approx. 100+100=200 m. If the signal is propagated in the rock formation at a velocity of 2000 metres/second, the seismograms must be recorded/represented for at least 0.1 second.

If we also intend to record successive arrivals due to further multiple paths, then these seismograms must be of longer duration, for example 0.5 second.

The seismograms obtained by the method according to the present invention are obtained starting from multichannel recordings of the random sound/signal, which are converted using techniques of correlation and/or deconvolution into signals of the pulse type that can be likened to seismograms.

Determination of the observation times of the original sounds/vibration signals starting from which the seismograms are obtained for processing the final images depends on the axial dimension of the volume that is selected between a minimum axial distance XA and a maximum axial distance XB as illustrated in Fig. 2 and from the rate of penetration ROP of the TBM. The total time of acquisition at the geophone and at the sensors on the TBM covers the time of axial traverse of said partial volume by the sensors on the TBM and hence of said head of the TBM. This listening time, equal to (XB-XA)/ROP hours if the distance X is expressed in metres and ROP in m/h, can be of the order of minutes or even hours. The depth (XB-XA) of the volume selected is determined in the design of the survey with the aim of improving the signal/noise ratio (S/N), by selecting a sufficient depth, in keeping with the required/desired resolution.

For example, for a TBM that advances with ROP of 24 m per day, we obtain a progress of 1 m per hour. If said volume of the rock front is at a depth of 1 metre, an observation time of the geophone is 1 hour. Then pilot signals and signals at the geophones are recorded continuously for example for one hour or for contiguous time intervals whose sum is equal, for example, to one hour.

The total time for passing transversely through a portion of said volume of the rock front between the angles of rotation $\theta_1$ and $\theta_2$ as illustrated in Fig. 2 by a sensor integral with the head of the TBM can be shorter, even if the time intervals of traverse during successive revolutions are distributed over the time span of observation, which is 1 hour, i.e. during advance of the TBM between XA and XB. The time of transverse transit for a single revolution is limited by the speed of rotation RPM since the angular aperture of the partial volume is fixed, and for a single revolution is equal to $(\theta_2-\theta_1)*60/(2\pi*RPM)$ seconds if the angle $\theta$ is expressed in radians and RPM in revolutions/minute. Since the transit time of a single revolution is inversely proportional to RPM while the number of revolutions made in a given time interval is proportional to RPM, it follows that the total time of transverse transit obtained with all the revolutions that the TBM performs between XA and XB does not depend on RPM, but only on the relative angular aperture $(\theta_2-\theta_1)/2\pi$ and on the total axial transit time, which is limited by the rate of penetration ROP since the limits of axial advance are fixed for the volume selected.

If, for example, said partial volume comprises a surface facing the head of the TBM defining an angular sector of 30 degrees, i.e. 1/12 of 360°, then the traverse time of the sensor is 60 min/12=5 minutes.

This result is a sufficiently long time, and can be used for improving the S/N ratio, if compared with the time for single transverse transit of the TBM sensor in the same partial volume selected.

Defining a pilot plot composed of the succession of recordings of the sensors that gradually traverse said circular sector permits further lengthening of the observation time, making it largely consistent with the behaviour of the rock front. If the speed of rotation of the TBM is 10 rev/min, (RPM) = 1 revolution every 6 seconds. One twelfth of a revolution will be travelled (in the individual transit) in 0.5 second. Therefore we have a gain in listening time of (300 seconds = 5 min) 300/0.5 = 600 times relative to listening limited to just one transit in the sector.

If we consider the ratio (coherent signal)/(random noise), this improves as the square root of the number of time samples, obtaining an improvement of $\sqrt{600} \cong 25\ times$ in terms of S/N.

Advantageously, the listening time of the signals generated in a partial rock volume, through which the head of the TBM passes, can be further increased if instead of just one sensor, several sensors are used, which pass through periodically, one after another as in Fig. 2, which shows two sensors with radii Ri and Rj included in the circular sector between angles $\theta_1$ and $\theta_2$ and between the radii Rmin and Rmax and defining said partial volume.

With a sufficient distribution of sensors passing through each partial volume, this listening time is increased until it reaches the limit of the total listening time in the interval of advance between XA and XB. In this case S/N improves

as $\sqrt{7200} \cong 85$ for the example considered.

For these reasons it is advisable to refer to a group of sensors that passes through a partial volume, rather than a single sensor, although said group can comprise one or more sensors.

The signals recorded by sensors that do not pass through a first partial volume are initially discarded. They will be used subsequently for the time intervals in which they pass through a second partial volume, then a third etc..

Given the angular and axial position of the head of the TBM, the recording channels are selected automatically from the plurality of channels, each channel being associated with a respective sensor.

After obtaining at least one pilot trace as concatenation of suitably windowed channels, similar to that shown for the plot on the right in Fig. 5, a process of cross-correlation and/or deconvolution of said trace with a continuous signal of one or more geophones is used, even if both signals are recorded and distributed in a time interval of one hour.

Thus, the head of the TBM, according to the present invention, is provided with a certain number of blades or cutters. Each blade is a source point S.

Preferably, a pilot sensor P is fixed, corresponding to each blade. Said sensor P is able to measure the components of vibration, acceleration and/or force, in one or more directions, including axial PX, radial PR and tangential PT, as shown in Fig. 3.

It should be noted that the radial and tangential components rotate with the TBM. Each of these three components records one signal. Therefore a triple sensor detects three signals at a time.

Another reason for using several components on the TBM is that it is useful for characterizing the properties of emission of the source. In fact we are interested both in the signals that are propagated in the formation as pressure waves, commonly called P waves, typically more influenced by the presence of fluids, and the shear waves, commonly called S waves, less influenced by the presence of fluids, as well as converted, surface and guided waves.

All these waves are associated in a complex manner with the components of the source, and the measurements of the components PX, PR, PT can be of advantage for processing and interpreting the seismic signals of the TBM.

When the TBM advances, it produces signals, the position of the source of which is known, and measurements are collected with seismic sensors in the tunnel and/or outside of the tunnel for obtaining, with known methods of processing, seismic profiles of the tunnel (horizontal seismic profiles) which make it possible to create seismic sections and "while drilling" images of the formation to be bored in front of the excavation front, and obtain geophysical information along and around the tunnel.

With regard to the in-tunnel sensors, these can be placed in contact with the formation and/or can be arranged in various ways.

On the front of the TBM, these sensors that are moving, since they rotate together with the TBM itself, can for example be coupled to the formation with various solutions, for example moving arms, pressure measurements (for example with hydrophones) in the fluid with pressurized TBMs.

For the seismic signals recorded with these pilot sensors, it is desirable to carry out a transformation of the coordinate system. In particular from the rotating system integral with the TBM to a fixed system of reference, integral with the volume of rock front in front of the TBM.

With regard to the geophone(s), these can be installed in the formation in a fixed position, for example one or more geophones, with single sensors with one or more components, or with an array of sensors in order to record the various wave fields that are propagated along the tunnel, as shown in Fig. 1.

In general, the geometry of the in-tunnel receivers will be adapted for better utilization of the coverage with the sources arranged on the excavation front. The position of the receivers on the TBM itself seems to be best for the geometry of seismic measurement near the excavation front, but is more difficult to implement. During excavation, the TBM advances, being pushed by the jacks, and rotates. To carry out the processing of the measurements according to the method of the present invention it is essential to measure, synchronously with the seismic measurements, the principal parameters of boring, such as the speed of rotation RPM, the instantaneous angular position $\theta(t)$ of the rotating head, its axial thrust, its advance along the axis of excavation.

The speed of rotation RPM is expressed typically in revolutions per minute, and the instantaneous angular velocity is

$$\omega(t) = \frac{2\pi RPM(t)}{60} \qquad\qquad (1)$$

When the head of the TBM rotates, the blades and pilot sensors that are integral with it also rotate. The measurements while drilling are therefore referred to two coordinate systems, one rotating with axial, radial, and tangential components (X, R, T) integral with the TBM, and one fixed with axial, transverse-horizontal, and vertical components (X, Y, Z) integral with the rock formation, see Fig. 3. The instantaneous position of a moving point of emission where the point source S can be found is

$$(X, Y, Z) = (X, R\cos\theta, R\sin\theta) \qquad (2)$$

where $X$ represents the advance of the TBM, $R$ is the radius and $\theta = \theta(t)$ is the instantaneous angular position of the moving point on the head of the TBM.

According to the present invention, the components of the signals recorded on the head of the TBM given in the fixed system of reference relative to the formation are calculated. For the components of the pilot signal $P$ relative to the point of the source $S$, the following transformations from the moving system of reference to the fixed system are used:

$$\begin{pmatrix} P_x \\ P_y \\ P_z \end{pmatrix} = M(\theta) \begin{pmatrix} P_x \\ P_R \\ P_T \end{pmatrix} \qquad (3)$$

where:

$$M(\theta) = \begin{pmatrix} 1 & 0 & 0 \\ 0 & \cos\theta & -\sin\theta \\ 0 & \sin\theta & \cos\theta \end{pmatrix} \qquad (4)$$

It is preferable for a pilot sensor to be, as far as possible, in close contact with the respective blade that is cutting into the rock, so that predominantly it measures the vibrational signal generated by said blade.

In this way it is possible to determine the delay of the pilot signal itself, as this is detected in the immediate vicinity of the source, and therefore its delay is practically zero or otherwise negligible and/or can be determined with good accuracy.

Thus, on the TBM there are $N$ source points and each of said points, identified with the index $i=1...N,$ produces, during fracturing of the rock, a random signal $Si$ and it is assumed that the signals of the various points are statistically independent of one another.

These signals are superimposed in the wave fields irradiated in the formation, but also in the signals recorded on the TBM.

For the transfer function denoted by $Hij$ for a signal $Sj$ measured by $Pi$, said function represents a filter. Accordingly, the function $Hii$ represents the response to the pulse of the TBM for the signal emitted and measured at one and the same $i$-th point. The pilot signal measured at the $i$-th point can be expressed in the domain of the frequencies of the Fourier transforms as a function of the source signals as

$$P_i = \sum_{j=1}^{N} H_{ij} S_j + \alpha_i T_M \qquad (5)$$

where $\alpha_i$ are coefficients and $TM$ represents a term common to all the sensors due to the mechanical noise or to the signal produced by the synchronous percussion of the entire front of the TBM subject to the axial thrust of the jacks.

In matrix form the relation between source signals and pilot signals becomes

$$\begin{pmatrix} P_1 \\ \vdots \\ P_N \end{pmatrix} = H \begin{pmatrix} S_1 \\ \vdots \\ S_N \end{pmatrix} + \begin{pmatrix} \alpha_1 \\ \vdots \\ \alpha_N \end{pmatrix} T_M \qquad (6)$$

where $H$ is the matrix that characterizes the response to the pulse of the TBM given by

$$H = \begin{pmatrix} H_{11} & \cdots & H_{1N} \\ \vdots & \ddots & \vdots \\ H_{N1} & \cdots & H_{NN} \end{pmatrix} \qquad (7)$$

Now, (6) can be rewritten as

$$\begin{pmatrix} \hat{P}_1 \\ \vdots \\ \hat{P}_N \end{pmatrix} = H \begin{pmatrix} S_1 \\ \vdots \\ S_N \end{pmatrix} \qquad (8)$$

where $\hat{P}_i = P_i - \alpha_i T_M$ represents the vector of the pilot signals from which the "bias" of the synchronous signal $TM$ has been removed. When the local signals generated by the individual point sources are dominant in measurement $P$ relative to the synchronous signal of the entire front, the coefficients $\alpha_i$ are negligible and we can assume that $\hat{P}_i \approx P_i$. When the coefficients $\alpha_i$ are not negligible, to apply the method efficiently it is important to remove as far as possible the common (synchronous) signal (noise) $TM.$ This signal (noise) can be estimated with supplementary measurements on the jacks or on the structure of the TBM. This can also be used for the purposes of TSWD in the approximation that the TBM is a point source, i.e. can be used with conventional TSWD methods that are already known. An approximate comparative estimate can be obtained with the sum

$$\sum_i P_i = T_M \sum_i \alpha_i + \sum_{ji}' H_{ij} S_j \qquad (9)$$

observing that the RMS amplitude ratio between the first and second term of the second member of the preceding equation increases as $\sqrt{N}$, and that, with a suitable number of pilot measurements, the second term can become relatively negligible. The signal $TM$ can also be estimated with the joint use of supplementary measurements and techniques of statistical independence.

Optional supplementary measurements can be obtained by sensors placed in positions of thrust or close to other sources of mechanical noise.

It is important to use an adequate number of pilot sensors to obtain a complete estimate of the response of the system. To obtain the independent source signals it is necessary to determine $H$ and calculate

$$\begin{pmatrix} S_1 \\ \vdots \\ S_N \end{pmatrix} = H^{-1} \begin{pmatrix} \hat{P}_1 \\ \vdots \\ \hat{P}_N \end{pmatrix} \qquad (10)$$

The operation of determination of $H$ can be carried out by various methods, which can be used separately or jointly. $H$ can be measured directly with test pulses imparted and recorded at all the source points. An estimate of the solution of equation (10) can also be calculated using the recorded data, with the assumption that the signals *Si* are statistically independent of one another, i.e. that

$$S_i S_j^\bullet = \delta_{ij} \qquad (11)$$

assuming for simplicity signals of unit amplitude, where $\delta_{ij}$ is the Kronecker delta function and the asterisk "*" represents the conjugated complex. Orthogonalization and estimation of the vectors is obtained with a method of the type

$$\begin{pmatrix} \hat{S}_1 \\ \vdots \\ \hat{S}_N \end{pmatrix} = Q \begin{pmatrix} \hat{P}_1 \\ \vdots \\ \hat{P}_N \end{pmatrix} \qquad (12)$$

where $\hat{S}$ is an estimate of S for which we have $S \cong \hat{S}$, where Q is a matrix such that the product of Q and its conjugate transpose $Q^T$ is the reciprocal of the matrix of cross-covariance *CP* of the vector of the pilots $\hat{P}$, i.e.

$$CP = \begin{pmatrix} \hat{P}_1 \hat{P}_1^\bullet & \cdots & \hat{P}_1 \hat{P}_N^\bullet \\ \vdots & \ddots & \vdots \\ \hat{P}_N \hat{P}_1^\bullet & \cdots & \hat{P}_N \hat{P}_N^\bullet \end{pmatrix} = \frac{I}{QQ^T} \qquad (13)$$

where I is the identity matrix. Equation (13) is calculated verifying that the orthogonal vectors obtained with equation (12) are representative of the independent measurements at the various points. Alternatively, it is also possible to work with methods of statistical separation (blind) if the statistically independent signals at the various source points have mutually different, non-Gaussian distributions.

Under suitable conditions, it is assumed, by the principle of reciprocity, that the matrix H is symmetric, i.e. equal to its transpose, i.e.

$$H = H^T \qquad (14)$$

in which case it is sufficient to calculate just the upper triangular semimatrix. Moreover, in the presence of properties of constructive symmetry of the TBM, it may be sufficient to calculate a smaller number of terms relative to the complete matrix, for example only for some angular positions if the structure of the TBM has periodic properties.

It is observed that the degree of separation of the signals S, obtainable from the inversion of said matrix, may depend on the frequency of the signal, since the signals at the low frequencies are relatively less sensitive to the local characteristics of the TBM and are separable.

Once the independent signals S have been obtained at the various points of the TBM, their instantaneous position is calculated with equation (2) and optionally their oriented components with equations (3) and (4).

Thus, the pilot signals are windowed in relation to the passage of the respective sensors through a predefined partial volume, in order to identify the signal in an emission zone that is fixed relative to the formation, i.e. inside said partial volume.

The correlation C of the signal recorded by the geophone at G with the pilot signals S obtained from the sensors distributed on the head of the TBM can be expressed in the domain of the Fourier frequencies f as

$$C = GS^\bullet \qquad (15)$$

In reality the source S emits the signal at positions that vary continuously relative to the formation during rotation. The instantaneous components of the signal detected are given in a fixed system of reference. Or it is assumed approximately that a sensor passing through a predefined partial volume of the front or rock formation is closed and the average coordinates of the sensor in the volume are used for stating the components of the signal detected in the fixed system of reference.

Preferably, a partitioning can be considered based on angular sectors facing the head of the TBM that vary with the radius, in which the source is distributed on fairly shorts arcs limited in suitable radial intervals to represent, to a good approximation, a point source for the purposes of analysis of the present invention. Referring to Fig. 1, where a diffracting body D is illuminated by signals emitted by the TBM, it should be noted, see Fig. 2, that the angular sector, $\theta_1 \le \theta \le \theta_2$, within the volume, is kept fixed relative to the formation. The source is located periodically in said angular sector at time intervals

$$t_1 + nT_R \le t \le t_2 + nT_R \qquad (16)$$

where n is an integer and $T_R$ is the period of rotation given by

$$T_R = \frac{2\pi}{\omega} \qquad (17)$$

where

$$\begin{aligned} t_1 &= t(\theta_1) \\ t_2 &= t(\theta_2) \end{aligned} \qquad (18)$$

In other words the correlation (and/or deconvolution) uses the source signal s, where s in lower case is the signal in time and S in upper case is the corresponding Fourier transform in the frequencies, modified in the times, in order to select only the signal in time windows that correspond to location of the source in the emission arc, calculating

$$\widetilde{s} = \begin{cases} s & t_1 + nT_R \le t \le t_2 + nT_R \\ 0 & otherwise \end{cases} \qquad (19)$$

In the frequency domain, we obtain the correlated signal

$$\widetilde{C} = G\widetilde{S}^* \qquad (20)$$

For example, if the speed of rotation of the TBM is 10 revolutions per minute, $T_R$ = 6 seconds and an arc of 30 degrees is travelled in 0.5 second. Therefore 0.5 second of data is used every 6 seconds of recording. However, where the conditions of symmetry permit, the arc of emission can be covered by several point sources $S_k$ with fairly similar radii, with $R_k$ between Rmin and Rmax, which from time to time, alternately, are located within the same fixed angular sector of emission. In this case, the useful time of measurement of the source signal can be increased until the whole time in which continuous signal emission occurs is covered. We get

$$\widetilde{s} = \sum_k \widetilde{s}_k \qquad (21)$$

It is preferable for the calculation of the time windows schematically indicated in equation (19) to be performed by means of ramps to avoid "ringing" effects introduced by truncation of the digital data generated. An example of the sum (21) with synthetic data for a single period of rotation is shown in Fig. 5, where the trace representing the signal $\tilde{s}$ (equation 21) of an ideal source associated with the volume is obtained by placing in succession the traces of the sensors that gradually pass through a predefined partial volume.

The partitioning of the head of the TBM and of the volume of rock formation that faces it can be carried out according to the various ways within the capacity of a person skilled in the art, for the purpose of better illuminating reflecting or diffracting elements as well as investigating the signals transmitted in front of and around the TBM.

The elements and characteristics illustrated in the various preferred embodiments can be combined while remaining within the scope of protection of the present application.

**Claims**

1. Method for acquisition and processing of seismic signals during tunnel boring comprising the following steps:

> arrangement of two or more pilot sensors (P1, P2, etc.) on the head of a boring machine (TBM),
> arrangement of one or more seismic sensors (G1, G2, etc.) in contact with a rock formation to be bored for recording a reflected and/or transmitted seismic signal,
> virtual division of the rock formation to be bored into partial volumes,
> continuous recording of signals detected by means of the aforementioned sensors (P1,P2,....G1,G2,....)

> **characterized in that** said method further comprises the following steps:

> time windowing of the pilot signals recorded by said pilot sensors (P1, P2, etc.) when passing through said predefined partial volumes, in order to obtain at least one independent pilot plot for each of said partial volumes,
> relating said at least one pilot plot to said reflected and/or transmitted seismic signal for characterizing the rock formation to be bored.

2. Method according to Claim 1, **characterized in that** said pilot sensors are able to detect vibrational components of acceleration and/or force according to a first system of reference associated with the head of the boring machine, in which a reference coordinate axis is associated with the axis of rotation of the machine.

3. Method according to the preceding claims, further comprising a step of recording instantaneous parameters of excavation/boring, including advance and/or angle of rotation and/or rate of penetration ROP and/or speed of rotation RPM and/or thrust.

4. Method according to Claim 3, comprising, when the advance and the angle of rotation of the boring machine are known, a further step of associating with said rock formation, a second system of reference integral with it and performing a transformation of coordinates of said vibrational components from said first system of reference to said second system of reference.

5. Method according to the preceding claims, **characterized in that** said step of relating said at least one pilot plot to said reflected seismic signal comprises an operation of correlation and/or deconvolution between said signals.

6. Device for acquiring and processing seismic signals during tunnel boring comprising processing means capable of executing the steps described in any one of the preceding claims.

7. Computer program that comprises means for coding programs adapted to perform the steps of Claims 1 to 5, when said program is run on a computer.

8. Computer-readable means comprising a recorded program, said computer-readable means comprising means for coding programs adapted to perform the steps of Claims 1 to 5, when said program is run on a computer.

**Patentansprüche**

1. Verfahren zum Gewinnen und Verarbeiten seismischer Signale während des Bohrens eines Tunnels, umfassend die folgenden Schritte:

Anordnen von zwei oder mehr Pilot-Sensoren (P1, P2, usw.) an dem Kopf einer Bohrmaschine (TBM);
Anordnen eines oder mehr seismischer Sensoren (G1, G2, usw.) in Kontakt mit einer zu bohrenden Gesteins-Formation zum Aufzeichnen eines reflektierten und/oder transmittierten seismischen Signals;
virtuelles Teilen der zu bohrenden Gesteins-Formation in Teil-Volumina;
kontinuierliches Aufzeichnen von Signalen, die mittels der vorgenannten Sensoren (P1, P2, ...., G1, G2, ....) erfasst werden;

**dadurch gekennzeichnet, dass** das Verfahren weiter die folgenden Schritte umfasst:

genaues Untersuchen der Zeit (time windowing) der von den Pilot-Sensoren (P1, P2, usw.) beim Durchtreten durch die vordefinierten Teilvolumina aufgezeichneten Pilot-Signale, um wenigstens einen unabhängigen Pilot-Plot für jedes der Teilvolumina zu erhalten;
In-Beziehung-Setzen des wenigstens einen Pilot-Plots mit dem reflektierten und/oder transmittierten seismischen Signal zum Charakterisieren der zu bohrenden Gesteins-Formation.

2. Verfahren nach Anspruch 1, **dadurch gekennzeichnet, dass** die Pilot-Sensoren in der Lage sind, Vibrations-Komponenten von Beschleunigung und/oder Kraft gemäß einem ersten mit dem Kopf der Bohrmaschine assoziierten Referenz-System zu erfassen, in dem eine Referenz-Koordinaten-Achse mit der Rotationsachse der Maschine assoziiert ist.

3. Verfahren nach den vorangehenden Ansprüchen, weiter umfassend einen Schritt des Aufzeichnens sofortiger Parameter von Aushub/Bohren, einschließend Vortrieb und/oder Rotationswinkel und/oder Eindring-Rate (rate of penetration; ROP) und/oder Rotationsgeschwindigkeit (RPM) und/oder Vorschub.

4. Verfahren nach Anspruch 3, umfassend dann, wenn Vortrieb und Rotationswinkel der Bohrmaschine bekannt sind, einen weiteren Schritt des Assoziierens eines zweiten Referenz-Systems mit der Gesteins-Formation, das integral damit ist, und des Durchführens einer Transformation von Koordinaten der Vibrations-Komponenten von dem ersten Referenz-System zu dem zweiten Referenz-System.

5. Verfahren nach den vorangehenden Ansprüchen, **dadurch gekennzeichnet, dass** der Schritt des In-Beziehung-Setzens des wenigstens einen Pilot-Plots mit dem reflektierten seismischen Signal einen Vorgang von Korrelation und/oder Dekonvolution zwischen den Signalen umfasst.

6. Vorrichtung zum Gewinnen und Verarbeiten seismischer Signale während des Bohrens eines Tunnels, umfassend eine Verarbeitungs-Einrichtung, die befähigt ist, die in irgendeinem der vorangehenden Ansprüche beschriebenen Schritte auszuführen.

7. Computer-Programm, das Mittel zum Kodieren von Programmen umfasst, die dafür angepasst sind, die Schritte der Ansprüche 1 bis 5 durchzuführen, wenn man das Programm auf einem Computer laufen lässt.

8. Von einem Computer lesbare Einrichtung, umfassend ein aufgezeichnetes Programm, wobei die von einem Computer lesbare Einrichtung Mittel zum Kodieren von Programmen umfasst, die dafür angepasst sind, die Schritte der Ansprüche 1 bis 5 durchzuführen, wenn man das Programm auf einem Computer laufen lässt.


**Revendications**

1. Procédé d'acquisition et de traitement de signaux sismiques durant le percement des tunnels comprenant les étapes suivantes :

agencement de deux ou plusieurs capteurs pilotes (P1, P2, etc.) sur la tête d'une machine de forage (TBM),
agencement d'un ou de plusieurs capteurs sismiques (G1, G2, etc.) en contact avec une formation de roche à percer pour enregistrer un signal sismique réfléchi et/ou transmis,
division virtuelle de la formation rocheuse à transpercer en des volumes partiels,
enregistrement continu de signaux détectés au moyen des capteurs précités (P1, P2, ... G1, G2),
**caractérisé en ce que** ledit procédé comprend en outre les étapes suivantes :

fenêtrage de temps des signaux pilotes par lesdits capteurs pilotes (P1, P2, etc.) au moment du passage à travers lesdits volumes partiels prédéfinis, pour obtenir au moins un plot pilote indépendant pour chacun desdits volumes partiels,

la mise en rapport dudit au moins un plot pilote avec ledit signal sismique réfléchi et/ou transmis pour la caractérisation de la formation rocheuse à transpercer.

2. Procédé selon la revendication 1, **caractérisé en ce que** lesdits capteurs pilotes sont aptes à détecter des composants d'accélération et/ou de force vibrationnels en accord avec un premier système de références associé à la tête de la machine de forage, où un axe de coordonnée de référence est associé à l'axe de rotation de la machine.

3. Procédé selon les revendications précédentes, comprenant en outre une étape d'enregistrement de paramètres instantanés d'excavation/forage, incluant l'avancement et/ou l'angle de rotation et/ou le taux de pénétration ROP et/ou la vitesse de rotation RPM et/ou la poussée.

4. Procédé selon la revendication 3, comprenant, lorsque l'avancement et l'angle de rotation de la machine de forage sont connus, l'étape ultérieure consistant à associer à ladite formation rocheuse, un deuxième système de références intégral avec celle-ci et effectuant une transformation de coordonnées desdits composants vibrationnels dudit premier système de référence audit deuxième système de référence.

5. Procédé selon les revendications précédentes, **caractérisé en ce que** ladite étape consistant à mettre en relation ledit au moins un plot pilote avec ledit signal sismique réfléchi comprend une opération de corrélation et/ou de déconvolution entre lesdits signaux.

6. Dispositif d'acquisition et de traitement de signaux sismiques durant le percement des tunnels comprenant des moyens de traitement aptes à exécuter les étapes décrites dans l'une quelconque des revendications précédentes.

7. Programme d'ordinateur qui comprend des moyens pour le codage de programmes aptes à exécuter les étapes des revendications 1 à 5, où ledit programme est exécuté sur un ordinateur.

8. Moyen lisible par ordinateur comprenant un programme enregistré, ledit moyen lisible par ordinateur comprenant des moyens pour le codage de programmes aptes à exécuter les étapes des revendications 1 à 5, lorsque ledit programme est exécuté sur un ordinateur.

Fig. 1

Fig. 2

Fig. 3

Fig. 4

Fig. 5